# EUROPEAN PATENT SPECIFICATION

(11) **EP 3 835 920 B1**
(45) Date of publication and mention of the grant of the patent: **11.10.2023**
(21) Application number: 21153387.2
(22) Date of filing: 21.02.2007
(51) Int. Cl.: G06F 1/16, G06F 3/048, G06F 3/033, G06F 3/044, G06F 3/0354, G06F 3/04895, G06F 3/01

(54) **ELECTRONIC DEVICE HAVING DISPLAY WITH TOUCH SENSITIVE PERIMETER FOR USER INTERFACE AND CONTROL**
ELEKTRONISCHE VORRICHTUNG MIT ANZEIGE MIT BERÜHRUNGSEMPFINDLICHER UMFANG FÜR EINE BENUTZEROBERFLÄCHE UND STEUERUNG
DISPOSITIF ÉLECTRONIQUE DOTÉ D'UN AFFICHAGE AVEC PÉRIMÈTRE SENSIBLE AU TOUCHER POUR L'INTERFACE UTILISATEUR ET LA COMMANDE

(30) Priority: 03.03.2006 US 367749; 03.03.2006 WO PCT/US2006/008349; 23.06.2006 US 426078
(43) Date of publication of application: 16.06.2021
(62) Divisional of application: 09170572.3
(73) Proprietor: Apple Inc., Cupertino, CA 95014 (US)
(72) Inventor: KING, Nick, Cupertino, CA, 95014 (US); KERR, Duncan Robert, Cupertino, CA, 95014 (US); HERBST, Paul, Cupertino, CA, 95014 (US); HOTELLING, Steven P., Cupertino, CA, 95014 (US)
(74) Representative: Lang, Johannes

(56) References cited:
- EP-A1- 1 505 484
- US-A- 4 566 001
- US-A- 6 131 047
- US-A1- 2001 043 189
- US-A1- 2004 012 572
- US-B1- 6 597 384

## Description

### FIELD OF THE DISCLOSURE

The subject matter of the present disclosure relates to an electronic device having a display and a surrounding touch sensitive bezel for user interface and control.

### BACKGROUND OF THE DISCLOSURE

There exist today many types of hand-held electronic devices, each of which utilizes some sort of user interface. The user interface typically includes an output device in the form of a display, such as a Liquid Crystal Display (LCD), and one or more input devices, which can be mechanically actuated (*e.g*., switches, buttons, keys, dials, joysticks, joy pads) or electrically activated (*e.g*., touch pads or touch screens). The display is typically configured to present visual information such as text and graphics, and the input devices are typically configured to perform operations such as issuing commands, making selections, or moving a cursor or selector of the electronic device. Each of these well-known devices has considerations such as size and shape limitations, costs, functionality, complexity, etc. that must be taken into account when designing the hand-held electronic device. In most cases, the user interface is positioned on the front face (or front surface) of the hand-held device for easy viewing of the display and easy manipulation of the input devices.

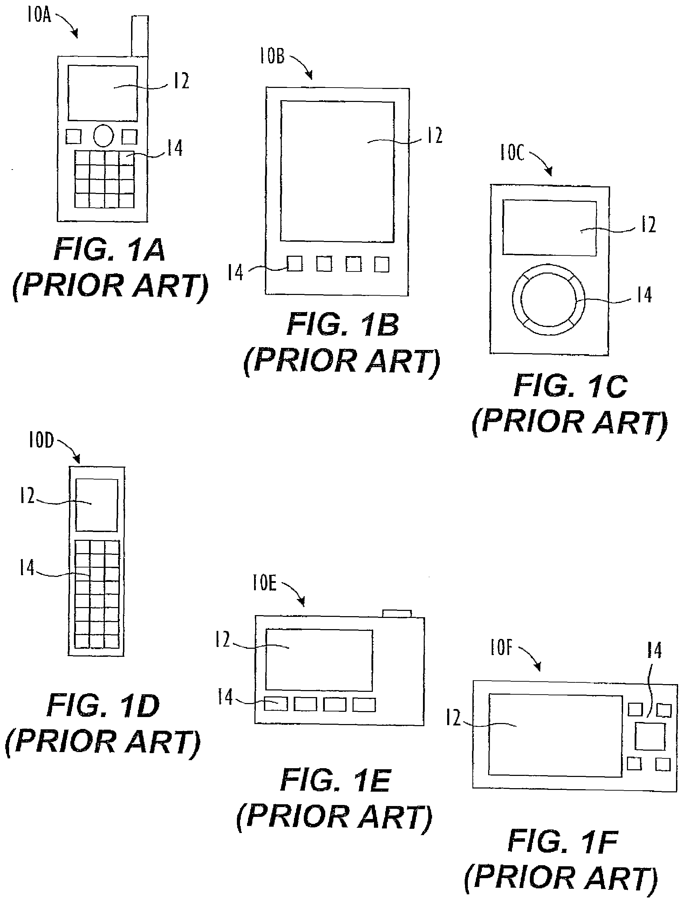

**FIGS. 1A-1F** are diagrams of various hand-held electronic devices including for example a telephone **10A** (**FIG. 1A**), a PDA **10B** (**FIG. 1B**), a media player **10C** (**FIG. 1C**), a remote control **10D** (**FIG. 1D**), a camera **10E** (**FIG. 1E**), and a Global Positioning System (GPS) module **10F** (**FIG. 1F**). In each of these devices **10**, a display **12**, which is secured inside the housing of the device **10** and which can be seen through an opening in the housing, is typically positioned in a first region of the electronic device **10**. Each of these devices **10** also include one or more input devices **14**, which are typically positioned in a second region of the electronic device **10** next to the display **12**.

To elaborate, the telephone **10A** typically includes a display **12** such as a character or graphical display, and input devices **14** such as a number pad and in some cases a navigation pad. The PDA **10B** typically includes a display **12** such as a graphical display, and input devices **14** such as a stylus based resistive touch screen and buttons. The media player **10C** typically includes a display **12** such as a character or graphic display and input devices **14** such as buttons or wheels. The iPod^{®} media player manufactured by Apple Computer. Inc. of Cupertino, California is one example of a media player that includes both a display and input devices disposed next to the display. The remote control **10D** typically includes an input device **14** such as a keypad and may or may not have a character display **12**. The camera **10E** typically includes a display **12** such as a graphic display and input devices **14** such as buttons. The GPS module **10F** typically includes a display **12** such as graphic display and input devices **14** such as buttons, and in some cases a joy pad.

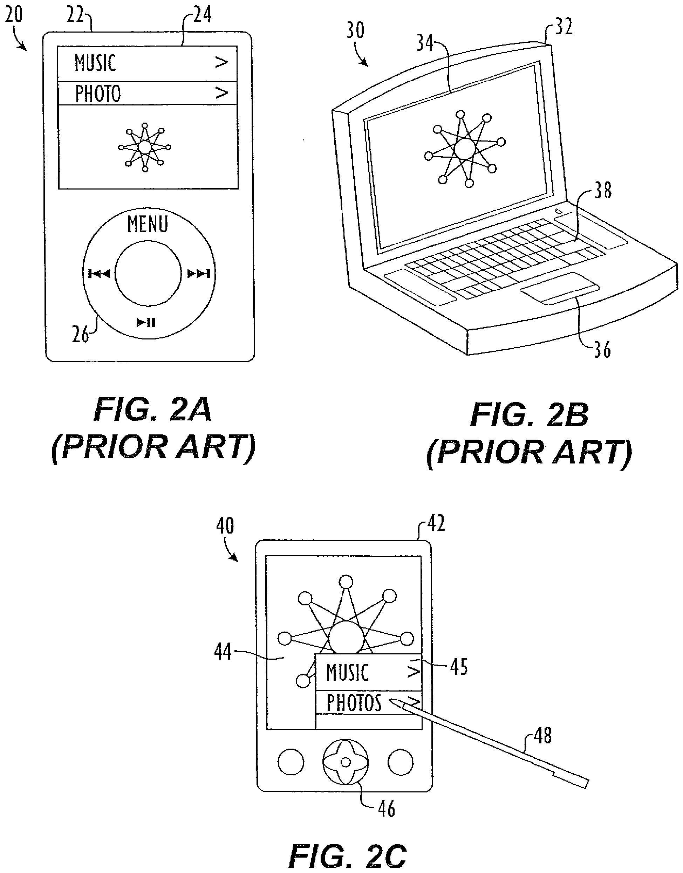

Such prior art devices **10A-10F** often employ a user interface in conjunction with the display **12** and input device **14**. In one example, **FIG. 2A** shows an electronic device **20**, such as a portable media player. The electronic device **20** has a display **24** and an input device **26** according to the prior art. The display **22** can show various forms of information (*e.g*., menu items, song titles stored in memory, etc.) of a user interface. The display **24** and input device **26** used in conjunction with the user interface allows the user to make selections *(e.g.,* select a song), to operate functions of the device (*e*.*g*., play, stop, or pause a song, etc.), and to perform other functions. In this device **20**, the input devices **26** is a "click wheel," such as used on an iPod^{®} media player manufactured by Apple Computer, Inc. of Cupertino, California.

The electronic device **20** has a housing **22** that contains the display **24** and the input device **26**. The input device **26** typically requires a number of components, such as pressure pads, printed circuit board, integrated circuits, etc. Accordingly, the housing **22** for the electronic device **20** must typically be extended or enlarged beyond the size of the display **24** so that the electronic device **20** can accommodate the components of the input device **26**. Consequently, due to the required components for the input device **26**, the size of the housing **22** may in some cases be larger than is actually required to house just the display **24** and any other necessary components (*i*.*e*., processor, memory, power supply, etc.) for the device **20**. In addition, placement of the display **22** and the input device **26** typically accommodate only one orientation of the device **20** when held by a user.

In another example, **FIG. 2B** shows another electronic device **30** having a display **34** and an input device **36** according to the prior art. The electronic device **30** can be a laptop computer or the like, and the input device **36** can be a touch pad used to control functions of the device **30**, such as moving a cursor, making selections, etc. The touch pad **36** is positioned on a housing **32** of the device **30** in conjunction with conventional components of a keyboard **38** and other physical inputs. The touch pad **36** can be categorized as either "resistive" or "capacitive." In the resistive category, the touch pad **36** is coated with a thin metallic electrically conductive layer and a resistive layer. When the touch pad **36** is touched, the conductive layers come into contact through the resistive layer causing a change in resistance (typically measured as a change in current) that is used to identify where on the touch pad **36** the touch event occurred. In the capacitive category, a first set of conductive traces run in a first direction on the touch pad **36** and are insulated by a dielectric insulator from a second set of conductive traces running in a second direction (generally orthogonal to the first direction) on the touch pad **36**. The grid formed by the overlapping conductive traces creates an array of capacitors that can store electrical charge. When an object (*e*.*g*., a user's finger) is brought into proximity or contact with the touch pad 36, the capacitance of the capacitors at that location changes. This change can then be used to identify the location of the touch event.

In yet another example, **FIG. 2C** illustrates an electronic device **40** having a touch screen display **44** according to the prior art as an input device. The electronic device **40** is a Personal Digital Assistant or the like. The touch screen display **44** is positioned on a housing **42**, and the electronic device **40** typically has some physical controls **46** on the housing **42**. A stylus **48** is used to touch locations of the touch screen display **44** to perform various functions. The stylus **48** is typically used like a mouse and arrow, and the display **44** can show various menu items and other user interface features. Touching a menu item on the display **44** with the stylus **48** can generate a pop-up or window **45** in which the user can then make a selection with the stylus **48**. The pop-ups or windows **45** overlay the content being displayed and tend to obscure it.

Recently, traditionally separate hand-held electronic devices have begun to be combined in limited ways. For example, the functionalities of a telephone have been combined with the functionalities of a PDA. One problem that has been encountered is in the way inputs are made into the device. Each of these devices has a particular set of input mechanisms or devices for providing inputs into the device. Some of these input mechanisms are generic to all the devices (e.g., power button) while others are not. The ones that are not generic are typically dedicated to a particular functionality of the device. By way of example, PDAs typically include a touch screen and a few dedicated buttons while cell phones typically include a numeric keypad and at least two dedicated buttons.

Thus, it is a challenge to design a device with limited input mechanisms without adversely affecting the numerous possible functions that the device can perform. As will be appreciated, it is preferable not to overload the electronic devices with a large number of input mechanisms as this tends to confuse the user and to take up valuable space, *i.e.,* "real estate." In the ease of hand-held devices, space is at a premium because of their small size. At some point, there is not enough space on the device to house all the necessary buttons and switches, etc. This is especially true when considering that all these devices need a display that typically takes up a large amount of space on its own. To increase the number of input devices beyond some level, designers would have to decrease the size of the display. However, this will often leave a negative impression on the user because the user typically desires the largest display possible. Alternatively, to accommodate more input devices designers may opt to increase the size of the device. This, too, will often leave a negative impression on a user because it would make onehanded operations difficult, and at some point, the size of the device becomes so large that it is no longer considered a hand-held device.

US 2001/043189 A1 discloses an active edge user interface which includes dynamically configurable flexible touch areas positioned near the perimeter of a display to support interactive communication between a user and a user environment for flexible active touch areas surrounding a display. The interface allows for multiple levels of sensitivity, texture, key travel, and varying widths of active touch areas based on the user environment.

Therefore, what is needed in the art is an improved user interface that works for multi-functional hand-held devices.

### SUMMARY OF THE INVENTION

The invention is defined by the appended claims. The dependent claims define advantageous embodiments.

The foregoing summary is not intended to summarize each potential embodiment or every aspect of the present disclosure.

### BRIEF DESCRIPTION OF THE DRAWINGS

The foregoing summary, preferred embodiments, and other aspects of subject matter of the present disclosure will be best understood with reference to a detailed description of specific embodiments, which follows, when read in conjunction with the accompanying drawings, in which:
**FIGS. 1A-1F** are diagrams of various electronic devices according to the prior art.
**FIG. 2A** illustrates an electronic device having a display and user controls according to the prior art.
**FIG. 2B** illustrates an electronic device having a display and a touch pad according to the prior art.
**FIG. 2C** illustrates an electronic device having a touch screen display according to the prior art.
**FIG. 3A** is a perspective view of a substantially full screen hand-held device with a limited number of buttons according to certain teachings of the present disclosure.
**FIG. 3B** is a front view of the hand-held device of **FIG. 3A** with at least one button.
**FIG. 3C** is a diagram of a graphical user interface separated into a standard region and a control region for the electronic device of **FIG. 3A****.**
**FIG. 3D** illustrates an exemplary media player interface for the electronic device of **FIG. 3A****.**
**FIG. 4** illustrates an embodiment of an electronic device having a display and a touch sensitive bezel according to certain teachings of the present disclosure.
**'****FIG. 5** schematically illustrates components of the electronic device of **FIG. 4****.**
**FIG. 6** illustrates a process of operating the touch sensitive bezel in flow chart form.
**FIG. 7** illustrates a process of operating the electronic device in flow chart form.
**FIG. 8** illustrates a process of operating the electronic device having an orientation sensor in flow chart form.
**FIGS. 9A-9B** illustrate an electronic device with an orientation sensor in two different orientations.
**FIG. 10** illustrates an embodiment of an electronic device capable of disregarding certain types of touch data.
**FIG. 11** illustrates an embodiment of an electronic device having a touch sensitive bezel around the display and having addition touch sensitive pads incorporated throughout various sides of the housing for the device.
**FIG. 12** illustrates some other possible bezel arrangements for an electronic device according to the present disclosure.
**FIG. 13A** illustrates an embodiment of a touch sensitive bezel having a plurality of conductive pads, a control module, and sensors according to certain teachings of the present disclosure.
**FIG. 13B** illustrates a circuit diagram of portion of the control module for the touch sensitive bezel of **FIG. 13A****.**
**FIG. 13C** illustrates an alternative embodiment of the touch sensitive bezel of FIG. 13A.
**FIG. 14** illustrates an embodiment of a touch sensitive bezel having force detection and location layers according to certain teachings of the present disclosure.
**FIGS. 15** through **19** illustrate an embodiment of a multimedia device having a touch sensitive bezel and a user interface according to certain teachings of the present disclosure.

While the subject matter of the present invention is susceptible to various modifications and alternative forms, specific embodiments thereof have been shown by way of example in the drawings and are herein described in detail. The figures and written description are not intended to limit the scope of the inventive concepts in any manner. Rather, the figures and written description are provided to illustrate the inventive concepts to a person skilled in the art by reference to particular embodiments.

### DETAILED DESCRIPTION

Co-pending U.S. Patent Application Ser. No. 11/367,749 (US 2006-0197753 A1) discloses electronic devices capable of configuring user inputs based on how the devices are to be used. The electronic devices may be multi-functional hand-held devices. The electronic devices have a user interface that requires no (or at most only a few) physical buttons, keys, or switches so that the display size of the electronic devices can be substantially increased. Preferably, the electronic devices eliminate such physical buttons, keys, or switches from a front surface of the electronic device so that additional surface area becomes available for a larger display on the electronic device. Ultimately, this strategy allows the electronic device to house a substantially full screen display. As used herein, a full screen display is a display that consumes, or at least dominates, a surface *(e.g.*, a front surface) of the electronic device.

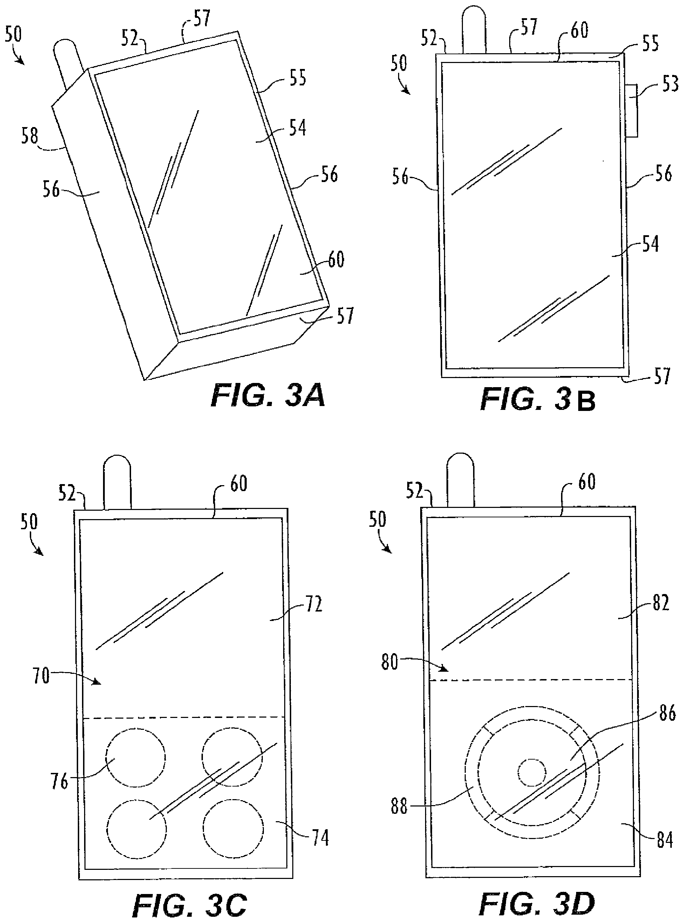

**FIG.** 3A is a perspective view of a multi-functional hand-held device **50** having a housing **52** and a substantially full screen display **60.** To accommodate the full screen display **60,** the multi-fictional hand-held device **50** is preferably configured with a limited number of physical buttons. Because a limited number of physical buttons are provided, the display **60** of the hand-held device **50** preferably uses a touch screen as the primary input mechanism for the electronic device **50.** The touch screen of the display **60** is a transparent touch sensing mechanism that is positioned over or incorporated into the display **60.** Typically, the touch screen display **60** works in conjunction with a graphical user interface (GUT) presented on the display **60.** For example, the GUI may present an on-screen button or user control on the display **60,** and the touch screen display **60** may detect when a user presses the on-screen button (*e.g.*, places their finger or stylus over the on-screen button). Aspects of the touch screen display **60** and GUI for the electronic device **50** are described in greater detail below.

The hand-held device **50** may be constructed with only cross-functional physical buttons, *i.e*.., there are no buttons dedicated to individual device functionalities. These types of buttons may include power buttons and hold switches. In another embodiment, the hand-held device **50** may not include any physical buttons at all. In some embodiments, the physical buttons are limited to only the sides **56** and back surface **58** of the hand-held device **50.** In other embodiments, the physical buttons of the hand-held device **50** are limited to the upper and lower portion of the sides **56** so that there are no buttons in the regions of the sides **56** where a user would physically support the device **50** (*i*.*e*., holding region). In still other embodiments, the physical buttons may be located on the front surface **54**, but only in the bezel **55** surrounding the display **60.** In some embodiments, the buttons may be located on only the top and bottom surfaces **57** of the device **50**.

As shown in the embodiment, not claimed, of **FIG. 3A****,** there are no physical buttons on the front surface **54** of the housing **52** so that the front surface **54** can be used almost entirely for the display **60**. Further, because the side surfaces **56** are used for grasping the device **50**, it may be preferred to leave the sides surfaces **56** free from buttons to prevent accidental actions in the event a user inadvertently presses a button while supporting the device **50.** Although the top and bottom surfaces **57** would not typically be used to hold the device **50,** these surfaces **57** are not ideal locations for buttons that are often actuated because it would be awkward to reach these buttons when operating the device **50** with one hand. Instead, the top surface **57** may be reserved for buttons that have limited action and generic functions that are cross-functional, for example, power and hold switches. The top and bottom surfaces **57** are also well suited for placement of I/O and communication ports. The top surface **57** may, for example, include a headset/microphone jack and an antenna, and the bottom surface **57** may include power and data ports.

In some cases, it may be desirable to place buttons in the upper or lower regions of the side surfaces **56** out of the way of the grasping hand of the user. This may be particularly well suited when the housing **52** of the device **50** is elongated more than the standard width of a user's grasping hand. As shown in **FIG. 3B****,** the hand-held device **50** includes a button **53** in the upper region on the right side surface **54** of the housing **52.** Because the button **53** is in the upper region, it tends to be out of the way of the grasping hand and therefore accidental activation is substantially eliminated. In one embodiment, the upper button **53** may be configured to switch the functionality of the multi-functional device **50.** For example, by pressing the button **53,** a new device functionality is activated, and the current device functionality is deactivated. Although the term "button" is used, it should be appreciated that the button **53** may correspond to a dial, wheel, switch, or the like.

As discussed above, the touch screen display **60** typically works in conjunction with a GUI presented on the display **50.** The GUI shows user controls on the touch screen display **60**, which in turn responds to user touches made in regions of the touch screen display **60** corresponding to the displayed user controls. The entire touch screen display **60** or only a portion may be used to show the user controls. Referring to **FIG. 3C****,** for example, a GUI **70** for the electronic device **50** of **FIG. 3A** is separated into a standard region **72** and a control region **74** on the touch screen display **60.** The standard region **72** represents what would normally be displayed on the display **60** when using the electronic device **50.** That is, any standard GUI screens associated with the device **50** are displayed in the standard region **72.** For example, when the device **50** is operated with a PDA functionality, a main menu (window with a set of icons), calendar, address book or date book may be displayed in the standard region **72.**

On the other hand, the control region **74** virtually represents those physical controls that would normally be physically placed on a particular type of electronic device. That is, the virtual controls **76** displayed in the control region **74** essentially mimic physical controls for a particular type of device. For example, when the device **50** is operated with a PDA functionality, the control region **74** may include virtual representations of a hand writing recognition area, a navigation pad, and the standard function buttons. The standard and control regions **72** and **74** can be positioned at any position on the display **60** (top, bottom, sides, center, etc.). For example, as shown in **FIG. 3C**, the control regions **72** and **74** may be positioned vertically relative to one another (one on top of the other) on the display **60.**

In another example, **FIG. 3D** is a diagram of a GUI **80** that can be used with the electronic device **50** when operated in a music player functionality. Again, the GUI **80** is divided into a standard region **82** and a control region **84.** Located inside the control region 84 are a virtual scroll wheel 86 and five virtual buttons 88..

In the embodiments, not claimed, of FIGS. 3A-3D, the electronic device 50 includes the touch screen display 60. In additional embodiments, the electronic device **50** according to certain teachings of the present disclosure may incorporate one or more touch sensitive surfaces (not shown) on the housing 52 of the electronic device 50 itself. These touch sensitive surfaces (not shown) can provide a large surface for tracking touch inputs er can provide small-dedicated areas, such as touch buttons, for performing dedicated functions. Furthermore, the one or more touch sensitive surfaces can be used in addition to or in the alternative to the touch screen display 60 discussed in the embodiment of FIGS. 3A-3D.

The touch sensitive surfaces may be located on any surface of the housing 52, any side of the housing 52, any portion of any side of the housing 52, or at dedicated locations on the surface of the housing 52. For example, the touch sensitive surfaces may be located on the sides 56 or back surface 58 of the housing 52 and may even be located at the bezel **(55;** FIGS. 3A-3B) located at the front surface 54 **of** the housing 52. In all of these cases, a large portion of the front surface 54 of the housing 52 is saved for the display 60 so that the viewing area of the hand-held electronic device 50 can be maximized.

The touch sensitive surfaces of the housing 52 may take the form of one or more touch panels that are positioned within the housing 52. The touch sensitive surfaces may be alternatively or additionally be provided directly by the housing 52. That is, the touch sensing components of the touch sensitive surfaces may be integrated into, incorporated into, or disposed underneath the housing 52 such that the housing 52 itself is touch sensitive and forms part of the touch sensitive surfaces (rather than using a separate touch panel). Similar to a touch screen. such touch sensitive surfaces recognize touches and the positions of the touches on the surfaces. The electronic device 50 has circuitry (not shown), which can include a controller or the like, and the circuitry interprets the touches and thereafter performs actions based on the touch events. Touch sensitive surfaces can be constructed in the same manner as a touch screen, except the surfaces need not be substantially transparent.

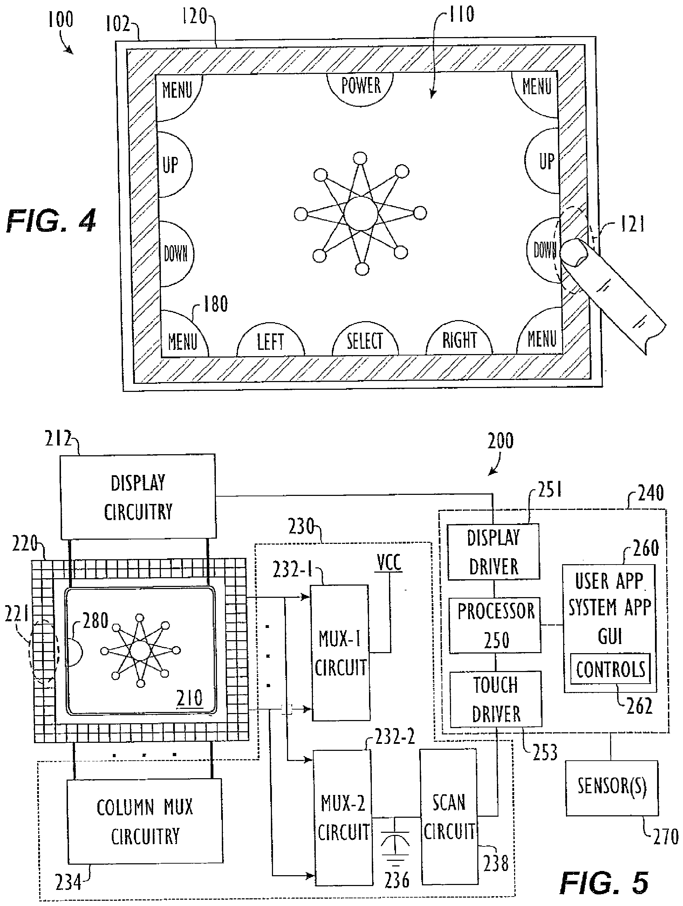

Having a display **60** that encompasses almost the entire front surface 54 of the housing 52 of the electronic device 50 has several advantages discussed herein. In addition, having one or more touch sensitive surfaces on various portions of the housing 52 that allow a user to control the electronic device 50 can also provide several advantages discussed herein. As alluded to above, one or more touch sensitive surfaces can be located on the bezel 55 *(i*.*e*., the portion of the front surface 54 of the housing 52 that surrounds the display **60).** Turning then to **FIG. 4****,** an embodiment of an electronic device **100** having a touch sensitive bezel **120** according to certain teachings of the present disclosure is illustrated. As will be discussed in more detail below, the touch sensitive bezel **120** is used for user interface and control of the electronic device **100** and is used in conjunction with a graphical user interface operating on the device 100.

The electronic device **100** includes a housing **102** and a display **110.** The housing **102** holds the display **110,** which can be any conventional display known and used in the art for electronic devices. Some common examples for the display **110** include a Liquid Crystal display (LCD), an electroluminescent display, and a touch screen display. The housing **102** also holds the touch sensitive bezel **120, which** is positioned substantially around the perimeter of the display 110. (In the present embodiment, the bezel **120** is positioned entirely around the perimeter of the display **110** so that the bezel **120** essentially frames the display **110.)** The housing **102** of the electronic device **100** also contains electronic components that provide a number of operations and features, such as memory access_ communications, sound, power, etc. In addition, the electronic device **100** houses electronic components (discussed in more detail below) that are used to control operation of the display **110** and the bezel **120.**

In one example, the electronic device **100** can be a picture frame having memory for storing digital pictures and for viewing on the display **110.** In another example, the electronic device **100** can be a digital media device having the display **110,** the touch sensitive bezel **120,** and lacking most or all buttons or similar physical controls on the housing 102. In other examples, the electronic device **100** can be an electronic game, a personal digital assistant, a multimedia device, a cellular telephone, a portable video player, a portable navigation device, or the like.

The bezel **120** is touch sensitive and is used to obtain touch data from the user in response to touch events made by the user on the bezel **120.** The electronic device **100** uses the touch data obtained with the bezel **120** to perform various operations and functions related to user interface and user control of the device **100.** For example, the touch data obtained with the bezel **120** can control what is displayed with the device **100,** what files are played, what the volume level is, what the settings for the display **110** are, etc.

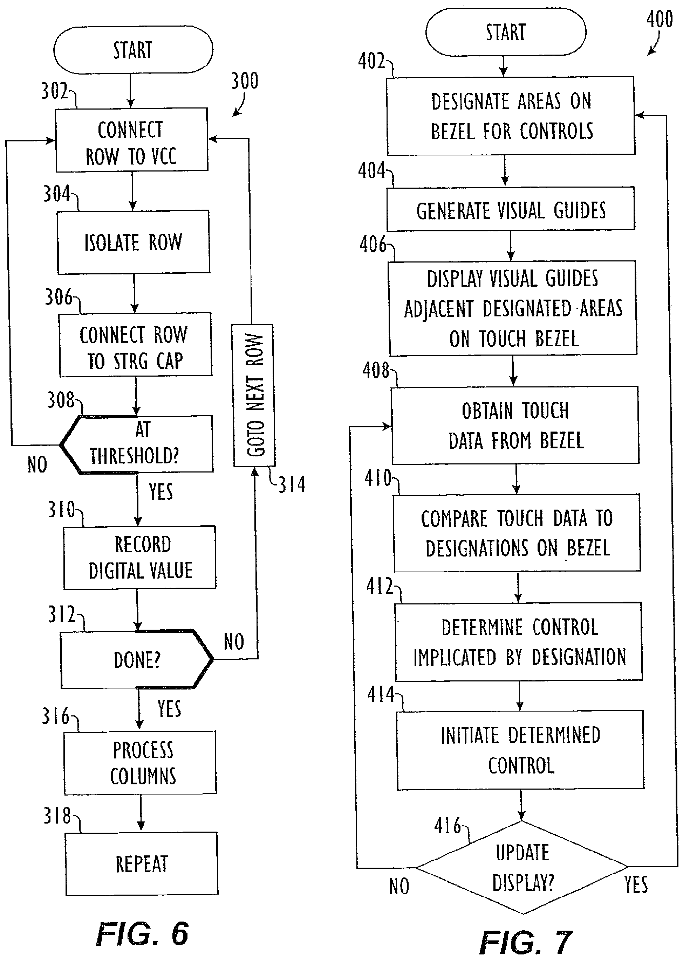

A number of techniques can be used to obtain touch data with the touch sensitive bezel **120.** In one embodiment, at least a portion of the bezel **120** includes a multi-touch input surface capable of generating touch data for a plurality of touch events made by the user simultaneously at different locations of the bezel **120.** For example, the bezel **120** can include a capacitive sensor array and data acquisition circuitry for detecting when a user touches areas or locations on the bezel **120..** An example of such an embodiment for the bezel **120** is discussed below with reference to FIGS. 5 and 6. During operation, the multi-touch input surface of the bezel **120** can be used to generate touch data that can be recognized as touch gestures discussed in more detail later.

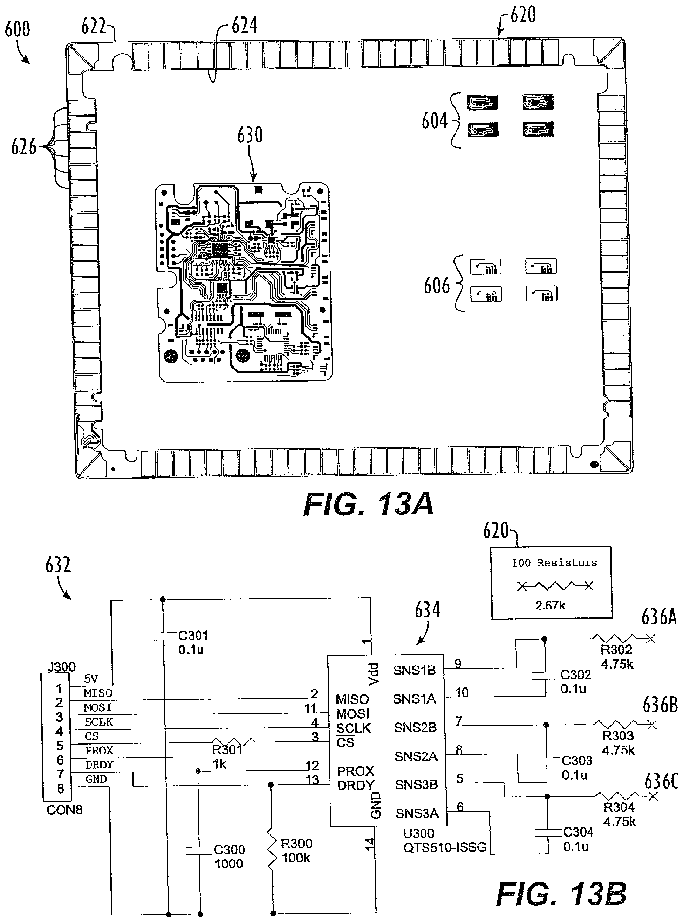

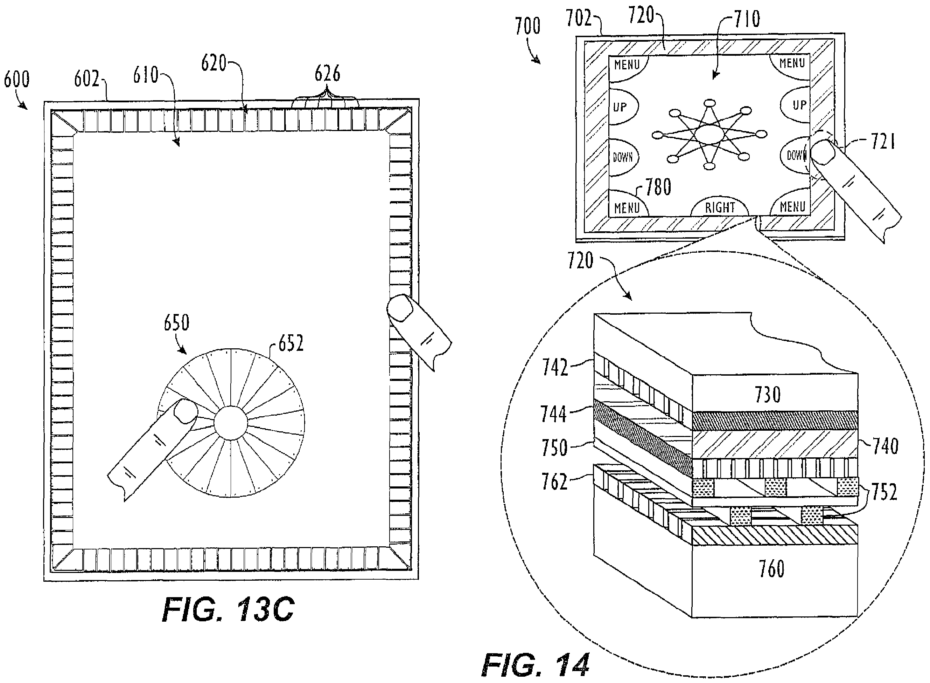

In another embodiment, at least a portion of the bezel 120 includes a plurality of resistive or capacitive sensors and an integrated circuit for analyzing resistive or capacitive values caused by a user touching the bezel 120. An example of an embodiment for such a bezel 120 is discussed below with reference to FIGS. 13A and 13B . In yet another embodiment, at least a portion of the bezel 120 includes force detection layers. An example of such an embodiment for the bezel 120 is discussed below with reference to FIG. 14.

During Operation of the device 100, areas or locations of the bezel 120 are designated for various user controls of the device 100. In one embodiment, particular user controls designated for areas of the bezel 120 may be indicated directly on the bezel 120 itself using graphics, words, or the like. In such an embodiment, the user controls having indications directly on the bezel 120 may be fixed and may be those user controls that a user would typically use when operating the device 100 in any of the possible modes or functionalities of the device 100. In another embodiment, particular user controls designated for areas of the bezel 120 may not have any visual indications appearing directly on the bezel 120 itself. Instead, the designated user controls may be in a logical or predetermined location on the bezel 120 that the user may know or expect.

In yet another embodiment, the electronic device 100 has user interface software or an application for displaying icons, menu items, pictures, or words (referred to herein as "visual guides") 180 on the display 110. The visual guides 180 correspond to the user controls designated for areas or locations of the bezel 120 and are shown on the display 110 adjacent designated areas on the bezel 120. By way of example, the visual guides 180 in FIG. 4 include "Menu," "Power," "Left," "Select," "Right," etc. It will be appreciated that the visual guides 180 and their arrangement depicted in FIG. 4 are only exemplary. More or fewer visual guides 180 may be provided, and the size of the visual guides 180 can be larger or smaller than the scale depicted in FIG. 4.

As shown in FIG. 4, the visual guides 180 are preferably located near the perimeter of the display 110 so that the majority of the display 110 can be dedicated to showing content or the like. Preferably and as shown in FIG. 4, the visual guides 180 are superimposed over visual data (e.g., content, text, a picture, video, etc.) shown on the display 110. The visual guides 180 can be displayed consistently on the display 110 while the electronic device 100 is operating. Alternatively, the visual guides 180 may not be shown in most circumstances during operation and can be displayed only after the user touches a predetermined portion of the bezel 120 or makes some user configured preference, or moves the device 100.

During operation, the user can touch designated areas (e.g., outlined area - 121) on the bezel 120 to initiate user controls for the electronic device 100. Some examples of possible user controls include menu operations, cursor operations, and data entry operations. The user interface software operating on the display 110 shows the visual guides 180 in positions adjacent the areas 121 on the bezel 120 designated to perform the user controls so the user may know the general area of the bezel 120 designated for the corresponding user control indicted by the adjacent visual guide 180. The designated areas 121 can be arbitrarily positioned and sized around the bezel 120 depending on the context or content of what is being displayed. The number of distinct areas 121 that can be designated depends on the size of the display 110 and the bezel 120 and depends on what type of touch sensitive sensors are used for the touch sensitive bezel 120_ In one example, one edge of the bezel 120 that is about 10,16 to 12,7 cm (4 to 5-inches) in length may accommodate about one-hundred distinct areas that can be designated for user controls.

In a further embodiment, the electronic device 100 may be capable of rotation and may have an orientation sensor (discussed in more detail below) for determining the orientation of the device 100. Based on the sensed orientation, the areas 121 on the bezel 120 designated for the user controls can be altered or relocated to match the current orientation of the device 110. Likewise, the user interface software operating on the device 100 can alter the location of the visual guides 180 to match the current position of the areas 121 on the bezel 120 designated for the user controls.

Now that details related the electronic device 100, display 110, and bezel 120 for user interface and control have been discussed above in FIG. 4, we now turn to a more detailed discussion of components for an electronic device of the present disclosure.

Referring to FIG. 5, components of an embodiment, not claimed, of an electronic device **200** according to certain teachings of the present disclosure are schematically illustrated. Some of the components of the electronic device **200** are not shown in **FIG. 5** but will be apparent to one skilled in the art. For example, the electronic device **200** may include a housing and conventional components, such as power circuitry, a central processing unit, memory, and the like. In one example of a conventional component, for instance, the memory can store data, software, etc. and can include random access memory, read-only memory, or both.

The electronic device **200** includes a housing (not shown), a display **210,** display circuitry **212,** a capacitive sensor array **220,** data acquisition circuitry **230,** and processing circuitry **240.** The display **210** is positioned on the housing (not shown) and has a perimeter. The capacitive sensor array **220** is also positioned on the housing (not shown) and is positioned substantially around the perimeter of the display **210** so that the capacitive sensor array **220** forms part of a bezel for the display **210.** The data acquisition circuitry **230** is coupled to the capacitive sensor array **220** and is used to acquire touch data from the array **220.** The processing circuitry **240** is coupled to the data acquisition circuitry **230** and to the display **210.**

As will be explained in more detail below, the processing circuitry **240** is configured to obtain touch data from the data acquisition circuitry **230,** determine if at least one user control is invoked by the obtained touch data, and initiate at least one operation for the electronic device **200** based on the determined user control. The processing circuitry **240** includes a processor **250** and includes one or more software/firmware components that operate on the processor **250**. These components include a display driver **251**, a sensor driver **253**, and system and/or user applications **260**.

The applications **260** have one or more user controls **262** that a user can invoke by touching one or more areas of the capacitive sensor array **220** in order to change or control operation of the electronic device **200**. To determine which user control **262** is invoked, the processing circuitry **240** designates one or more areas **221** of the capacitive sensor array **220** for the one or more user controls **262** of the applications **260**. Then, when a user touches one or more areas **221** of the capacitive sensor array **220**, the data acquisition circuitry **230** provides touch data to the processing circuitry **240**. The capacitive sensor array **220** and data acquisition circuitry **230** is preferably capable of generating touch data that describes more than one simultaneously touched areas **221** on the bezel **220** so that the touch data can cover instances when the user touches one area only, touches more than one area simultaneously, or makes a pattern or gesture of touches on the array **220**.

In turn, the processing circuitry **240** compares the obtained touch data to the one or more designated areas and determines which of the user controls **262** has been invoked by the user. The comparison of obtained touch data to the designated areas **221** may involve different levels of processing. In one level of processing, the processing circuitry **240** compares the location (*e*.*g*., rows and columns) that the obtained touch data occurred on the array **220** to the designated areas **221** for the user controls. If the obtained touch data occurs in the designated area **221** for a satisfactory time period or over an average extent of the area **221**, for example, then the processing circuitry **240** determines that the corresponding user control has been invoked.

In other levels of processing, the obtained touch data can include one or more locations (*e*.*g*., rows and columns) being touched on the array **220**, can include touch data obtained over an interval of time, can include changes in touch data over time, and can include other "aggregate" forms of touch data. In this level of processing, the processing circuitry **240** recognizes "touch gestures" from the touch data and determines which control is invoked by the "touch gesture." Some examples of "touch gestures" include a single "tap" at a location of the array **220**, two or more sequential taps made at substantially the same location of the array **220** within predefined intervals of one another, touch events occurring substantially simultaneously at two or more locations of the array **220**, sliding touches of one or more fingers by the user over the surface of the array **220**, sustained touch at one location of the array **220** in conjunction with sliding or tapping touches at other locations of the array **220**, and other combinations of the above.

To recognize such "touch gestures," one or more areas **221** of the array **220** are associated with a control **262,** and touch gestures involving one or more touches on those areas **221** are associated with the control **262.** The touch gesture can be a single momentary tap, a sustained touch, two or more sequential taps, a sweep of a finger, and any other possible touch arrangement. To then determine if the control **262** has been invoked, the processing circuitry **240** determines if the touch data includes those areas **221** associated with the control **262** and determines from the touch data if the touch gesture associated with the control **262** has occurred on those areas **221.**

Turning from discussion of the capacitive sensor array **220**, the processing circuitry **240** is also operatively connected to the display **210** by display circuitry **212.** The display driver **251** is used to configure visual data (*e.g*., content, screens, user interface elements, visual guides, etc.) and to send or present the visual data to the display circuitry **212.** The electronic device **200** preferably presents one or more visual guides **280** along the perimeter of the display **210.** In addition, the one or more visual guides **280** are preferably displayed at locations on the display **210** adjacent to corresponding areas **221** of the capacitive sensor array **220** designated for the one or more user controls **262** associated with the one or more visual guides **280.**

Given the overview of the electronic device **200** discussed above, we now turn to a more detailed discussion of the components of the electronic device **200** of the present embodiment. The capacitive sensor array **220** includes a plurality of rows and columns of capacitive sensors, and the array **220** may or may not be symmetrical. The rows and columns of the array **220** are positioned around the perimeter of the display **210.**

The data acquisition circuit 230 includes multiplexer ("MUX") circuitry coupled to the sensor array 220. In particular, two multiplexer circuits 232-1 and 232-2 (referred to as the MUX-1 and MUX-2 circuits) are coupled to the rows of the sensor array 220. Each row in the sensor array 220 can be electrically coupled to a reference voltage Vcc through the MUX-1 circuit 232-1 and can be electrically coupled to a storage capacitor 236 through the MUX-2 circuit 232-2. While not shown in detail, each column of sensor array 220 can be similarly coupled to a reference voltage Vcc and to a storage capacitor using column MUX circuits 234. Thus, a user touching a location or area 221 of the sensor array 220 can alter the capacitance measured at affected rows and columns of the array 220.

During operation, the MUX circuits 232 and 234 are responsible for coupling and stimulating successive elements of the sensor array 220 (e.g., rows, columns, or individual pixels - that is, an element at the intersection of a row and column) to the storage capacitor 236 in a controlled/sequenced manner and indicating that a measurement cycle has begun to the scan circuit 238. When the charge on storage capacitor 236 reaches a specified value or threshold, the scan circuit 238 records the time required to charge the storage capacitor 236 to the specified threshold. Consequently, the scan circuit 238 provides a digital value that is a direct indication of the capacitance of the selected element of the sensor array 220.

The sensor driver **253** obtains measured capacitance data from the acquisition circuitry 230. In turn, the sensor driver 253 processes the measured capacitance data and configures a corresponding control, command, operation, or other function designated by the row and column location of the capacitance data. Depending on what application, content, or the like is currently operating, the system application 260 and/or user application implements the corresponding user control 262_ Implementation may affect what is currently being displayed on the display 210. Consequently, the display driver 251 may operate the display circuitry 212 coupled to the display 210 in response to an implemented control 262. For example, a new menu may be presented on the display 210 in response to an implemented user control 262.

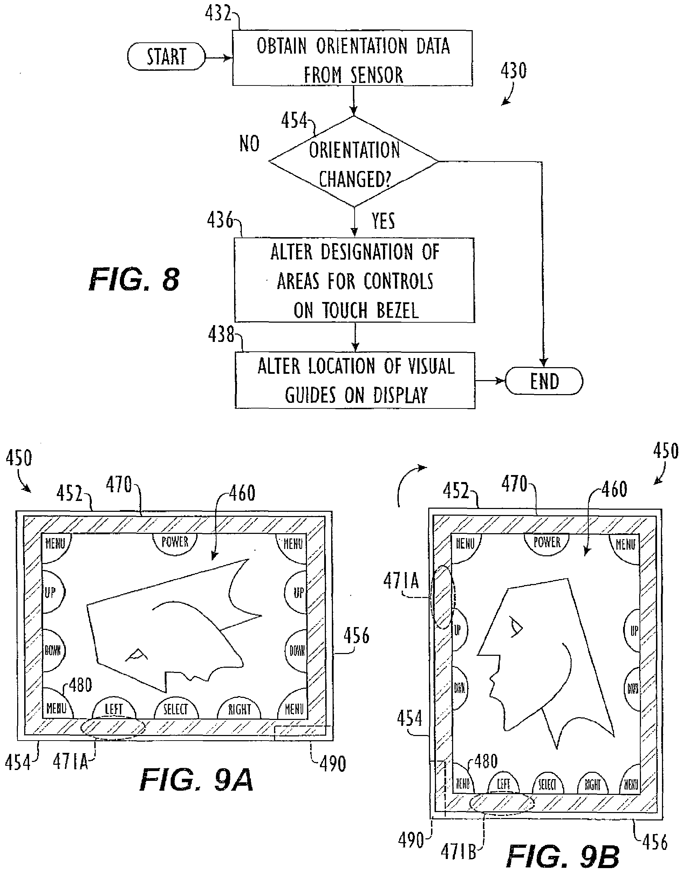

As shown in **FIG. 5**, the electronic device **200** can also include one or more sensors **270** coupled to the processing circuitry **240.** The one or more sensors **270** can include a Mercury switch, an acceleration sensor, inclinometer sensor, an electronic compass, a light sensor, a motion sensor, or an orientation sensor. In one embodiment, the orientation sensor **270** is a 3-G accelerometer similar to what is used in gyro remotes or used in hard drives to detect free fall. The accelerometer **270** detects gravity and generates orientation data that can indicate which edge of the display **210** is "up," "down," "north," or other direction. The processing circuitry **240** coupled to the accelerometer **270** determine the orientation of the electronic device **200** from the orientation data obtained from the sensor **270.** The determined orientation can then be used to designate or alter the location of the areas **221** on the array **220** to mach the orientation of the device **200.** In addition, the determined orientation can then be used to designate or alter the location of the visual guides **280** on the display **210** to mach the newly designated areas **221** on the array **220.** Furthermore, the determined orientation can then be used to rotate or flip the content shown on the display **210** to match the orientation of the device **200.** Details related to how the electronic device **200** can use orientation data are discussed below with reference to **FIGS. 8** and **9A****-9B.**

In another embodiment, the one or more sensors **270** can include one or more ambient light sensors for detecting the level of ambient light around the device **200.** Preferably, the device **200** includes at least two such ambient light sensors **270** for redundancy. Based on the level of ambient light detected, the electronic device **200** can automatically adjust the contrast and/or brightness of the display **210** accordingly. In yet another embodiment, the one or more sensors **270** can include a motion sensor, such as a passive pyroelectric sensor. The motion sensor **270** can be used to detect motion of the electronic device **200** from a stationary state so that the device **200** can "wake up" (*e.g*., turn on or come out of a standby mode) or can show previously hidden visual guides **280** on the display **210** in response to being moved.

Referring to **FIG. 6**, a process **300** of operating the electronic device having the capacitive sensor array **220** of **FIG. 5** for the touch sensitive bezel is illustrated in flow chart form. For better understanding, element numerals for components of FIG. 5 are concurrently provided in the discussion that follows. During operation, the MUX-1 circuitry 232-1 couples a first row of the sensor array 220 to the reference voltage Vcc for a specified period of time (Block 302) and then isolates or disconnects that row from Vcc (Block 304). Next, the MUX-2 circuitry 232-2 couples the same row to the storage capacitor 236 for a specified period of time, or until the voltage on storage capacitor 236 reaches a specified threshold (Block **306**).

While the MUX-2 circuitry **232-2** couples the selected sensor row to the storage capacitor **236**, a determination is made whether the storage capacitor's voltage reaches a specified threshold (Block **308**). If so (*i*.*e*., the "Yes" prong of Block **308**), the digital value corresponding to the time it took to charge the storage capacitor **236** to the specified threshold is recorded by the scan circuit **238** (Block **310**). If the storage capacitor's voltage does not reach the specified threshold during the time that the MUX-2 circuitry **232-2** couples the selected sensor row to the storage capacitor **236** (*i*.*e*., the "No" prong of Block **308**), then the acts of block **302-308** are repeated.

Once a digital value corresponding to the capacitance of the selected row has been obtained (Block **310**), a check is made to see if there are additional rows in the sensor array **220** that need to be sampled. If more rows need to be sampled, the process **300** goes to the next row at Block **314** and repeats the acts of Blocks **302-308.** If it is determined at Block **312** that all the rows in the sensor array **220** have been sampled in accordance with Blocks **302-308**, a similar sampling process is used to acquire a capacitance value for each column in the sensor array **220** (Block **316**). Once all rows and all columns have been processed, the entire process **300** is repeated, which can be done at a predetermined interval (Block **318**).

Referring to **FIG. 7****,** a process **400** of operating the electronic device of **FIG. 5** is illustrated in flow chart form. For better understanding, element numerals for components of **FIG. 5** are concurrently provided in the discussion that follows. During operation, areas **221** on the array **220** of the touch sensitive bezel are designated for user controls of the electronic device (Block **402**). In designating an area **221,** contiguous rows and columns of a portion of the capacitive sensor array **220** are associated with a user control for the electronic device **200.** The electronic device **200** also generates visual guides **280** for the user controls (Block **404**) and displays the visual guides **280** on the display **210** adjacent the designated areas **221** on the touch sensitive bezel **220** to which the visual guides **280** correspond (Block **406**). For example, the visual guides **280** are preferably displayed along the perimeter of the display **210** adjacent corresponding rows and columns of the capacitive sensor array **220** associated with the user controls for the electronic device **200**. In this way, the majority of the display **210** can be used to show content.

The electronic device **200** then obtains touch data with the capacitive sensor array **220** using the techniques disclosed herein (Block **408**). The touch data in a basic form includes information of which rows and columns of the capacitive sensor array **220** have been touched (*i*.*e*., have exceeded the capacitance threshold). The electronic device **200** performs various forms of processing of the obtained touch data. For example, the touch data can be processed to determine how long the rows and columns have reached a threshold capacitance, to determine how long rows and columns have been below the threshold capacitance since an initial period of being above the threshold, and to determine other forms of information. Furthermore, to facilitate processing, the touch data can be aggregated together into predefined intervals of time and portions of the array **220**. In addition, the touch data obtained at a first instance can be stored and later compared to touch data obtained at a subsequent instance to determine changes in the data overtime, caused by a user's touch movement on the array **220**, for example. These and other forms of processing of the touch data will be apparent to one skilled in the art with the benefit of the present disclosure.

After the touch data has preferably been processed with the techniques described briefly above, the electronic device **200** then compares the information from the touch data to the designations on the array **220** associated with the user controls for the device **200** (Block **410**). From the comparison, the electronic device **200** determines which user control is invoked by the designated area **221** of the array **220** that the user has touched (Block **412**). Then, the electronic device **200** initiates the determined user control to affect processing of the device **200** (Block **414**). Once the user control is implemented, it may be necessary to update the display **210** and the designated user controls (Block **416**). If the same visual guides **280** and designated user controls can be used, then the process returns to Block **408**, for example, to obtain any new touch data with the array **220**. If, however, new visual guides **280** and designated user controls are needed due to a change in the content of what is displayed or the context of the device's operation, then the process returns to Block **402** to designate new areas on the array **220** for user controls and proceeds to subsequent steps.

One skilled in the art will appreciate that the touch sensitive array **220** around the perimeter of the display **210** of the device **200** can be used to implement various user controls in some ways similar to how a conventional touch pad is used. In a brief example, the information at Block **410** may indicate a "tap" made by the user on the array **220**. This "tap" (*i*.*e*., a touch by a finger on the array **220** for a "short" duration of time) may have been performed in designated area **221** of the array **220.** The electronic device **200** determines that the area **221** invoked by the "tap" is designated for performing a "page up" control of what is being displayed on the device **200.** The time duration of the "tap" may indicate the amount or extent of the "page up" control. In response to the user control, the electronic device **200** causes what is being shown on the display **210** to page up as requested by the user.

As noted briefly above, the electronic device **200** of **FIG. 5** can include one or more sensors **270**, which can include an accelerometer or other orientation sensor Referring to **FIG**. **8**, a process **430** of operating the electronic device of **FIG. 5** having the orientation sensor **270** is illustrated in flow chart form. For better understanding, element numerals for components of **FIG. 5** are concurrently provided in the discussion that follows. Initially, the electronic device **200** obtains orientation data from the sensor **270** (Block **432**). The electronic device **200** can obtain the orientation data at periodic intervals or at certain points during operation. The electronic device **200** then determines whether the orientation of the device has changed (Block **434**). If not, the process **500** can end.

If the orientation has changed at Block **434**, the electronic device **200** determines how the orientation has changed and alters the designation of areas for user controls of the touch bezel (Block **436**). In particular, the processing circuitry **240** alters how the one or more areas **221** of the capacitive sensor array **220** are designated for the one or more user controls **262** so that the designation better matches the new orientation of the device **200**. In addition, if the display **210** is showing visual guides **280** for the corresponding areas **221** of the bezel **220,** then the electronic device **200** also alters location of the visual guides **280** on the display **210** so that they match the newly designated area **221** for the user controls on the array **220** (Block **438**). Then, the process **430** can end until called again during the operation of the electronic device **200.**

By way of example, **FIGS. 9A** shows an electronic device **450** having content on the display **460.** The device **450** is rectangular and can be oriented in either a "portrait" or a "landscape" orientation. Accordingly, the display **460** can show a picture or other content in either orientation. In some circumstances, the orientation of what is displayed may not match how the device **450** is currently orientated. The user may rotate or changes the orientation of the device **450**, for example, to the orientation shown in **FIG. 9B****.** The orientation senor **490** is used to determine the new orientation (*i*.*e*., rotation of 90-degrees), and the processing circuitry (not shown) of the device **450** determines that the areas **471** designated on the bezel **470** for certain user controls of the electronic device **450** should be changed. Accordingly, the processing circuitry alters the designation of the areas **471** of the bezel **470** so that they will better match the newly sensed orientation of the device **450.** In addition, because the electronic device **450** can display visual guides **480** relative to the designated areas **471** of the bezel **470**, the processing circuitry also alters location of the visual guides **480** on the display **460** so that their new locations match the new locations of the designated areas **471** of the bezel **470.**

For example, the area **471A** of where the "Left" control **480** in **FIG. 9A** will remain on the same side **454** of the device **450** as shown in **FIG. 9B****.** Yet, the "Left" control **480** is preferably orientated along the new bottom edge **456** of the device **450** so that it is in a position more amenable to the user. Thus, the old area **471A** is no longer designated for the "Left" control. Instead, a new area **421B** of the bezel **470** is designated for the "Left" control **480**, and the visual guide **480** for the "Left" control is displayed in the appropriate position of the display **470** along the new bottom edge **456** to match the new designated area **471B.**

In the example of **FIGS. 9A-9B**, orientation data from the orientation sensor **490** is used to alter the designation of the areas **471** for the user controls and the location of visual guides **480.** In other embodiments, the orientation of the content to be displayed may dictate how the designation of the areas **471** for the user controls and the location of visual guides **480** should be for the device **450.** For example, the display **460** of the electronic device **450** in **FIGS. 9A-9B** is rectangular and can be used to show content in "portrait" or "landscape" orientations. Depending then on the desired or required orientation for particular content (*e.g*., image, screen, user interface, or picture) to be shown on the display **460**, the electronic device **450** can alter the designation of the areas **471** for the user controls and the location of visual guides **480** according to the "portrait" or "landscape" orientations of the content. In other words, when the device **450** is preparing to display particular content, the electronic device **450** can determine the particular orientation for that content. Then, when the device **450** switches to show that new content on the display **460**, the electronic device **450** alters the designation of the areas **471** for the user controls and the location of visual guides **480** if the orientation of the newly displayed content is different from that previously displayed. Thus, the user can naturally rotate the device **450** to better view the newly displayed content in its preferred orientation (*e*.*g*., "portrait" or "landscape"), and the visual guides **480** and designated areas **471** will be already matched to the content's orientation.

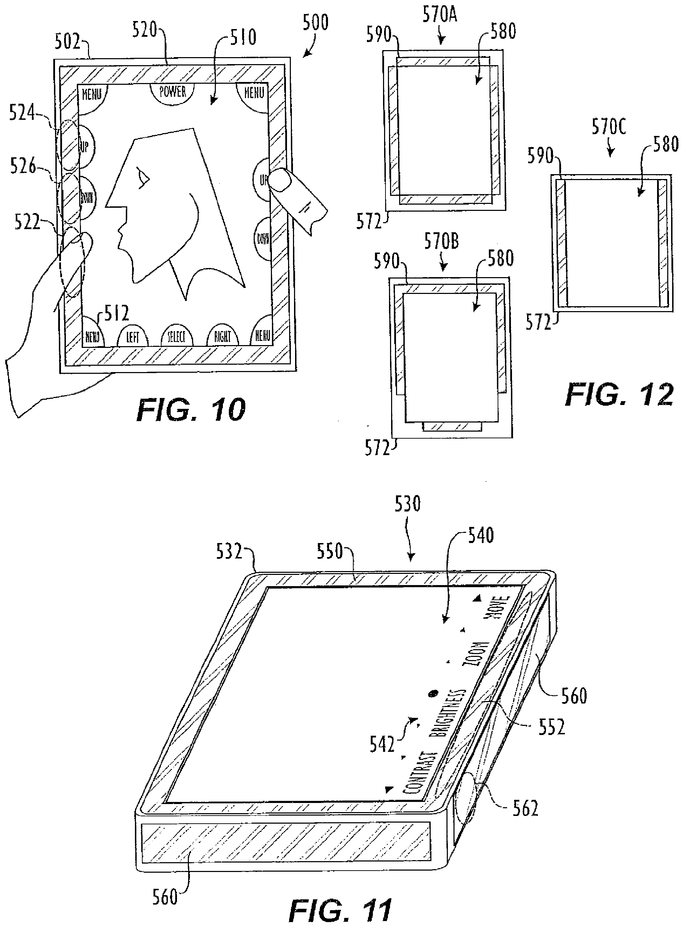

Turning to **FIG. 10**, the electronic device **500** of the present disclosure can also be configured to discriminate or ignore certain forms of touch data made on the bezel **520.** For example, the housing **502** of the electronic device **500** may be designed to fit mainly around the display **510** and the surrounding bezel **520.** As a result, when a user holds the electronic device **500**, it may be likely that portion of the user's hand (*e*.*g*., one of the user's fingers or thumb) will maintain consistent contact on portion **522** of the bezel **520.** In this instance, it is desirable that the electronic device **500** ignores such consistent contact made on the bezel **520.** The processing circuitry (not shown) of the device **500** can store information tracking how long touch data has occurred on portions of the bezel **520** and/or how many adjacent, designated areas have had repeated touch data. Then, after a predefined time limit, the processing circuitry can begin to ignore that consistent touch data in the portion **522** of the bezel **520** when determining what user controls the user is implicating. Furthermore, the processing circuitry can designated new locations for areas of the bezel **520** for user controls that are part of the ignored portion **522** of the bezel **520.** In the present example, the areas **524** and **526** for the "page up" and page down" user controls on the left side of the bezel **520** have been moved to new locations outside the ignored portion **522.** Likewise, the visual guides **512** associated with the "page up" and page down" user controls have been shifted to new locations adjacent to the newly designated areas **524** and **526.**

In previous embodiments, not claimed, of the present disclosure, the touch sensitive bezel of the present disclosure is arranged substantially around the entire perimeter of the display. In one alternative shown in **FIG. 11**, an embodiment of an electronic device **530** can have a touch sensitive bezel **550** around a display **540** just as before. In addition, the electronic device **530** can have one or more additional touch sensitive pads or surfaces **560** incorporated throughout various sides of the housing **532** for the device **530.** These additional touch sensitive pads **560** can be used to detect location caused by a user touching the pads **560** and/or can be used to detect force caused by a user pressing the pads **560.** The additional touch sensitive pads **560** can be positioned along edges of the housing **532** and can be positioned on the back of the housing **530.**

Any user controls designated for areas **562** on these additional touch sensitive pads **560** may be preconfigured and may not be change during operation. In this way, the user may know the functionality of the various pads **560** and can use the areas **562** to control features of the device **530** without the need of any visual guides **542** on the display **540**. Alternatively, the user may be able to designate any user controls for these additional touch sensitive pads **560** using setup and configuration operations of the device **530.** In yet another alternative, user controls for areas **562** of these additional pads **560** can be designated and redesignated by the electronic device **530** during operation in much the same way disclosed herein for areas **552** on the bezel **550.** For example, areas **562** on the pads **560** can be designated for user controls similar to the areas **552** that can be designated on the bezel **550**, and visual guides **542** can be displayed around the perimeter of the display **540** adjacent to corresponding areas **562** on the additional pads **560** in the same way that the visual guides **542** are displayed adjacent designated areas **552** of the bezel **550.**

In **FIG. 11**, for example, the area **552** on the bezel **550** can be designated to adjust values, and the areas **562** of the adjacent side pad **560** can be designated to select various attributes of the display **540**. Because the device **530** can be hand-held, the user can selected from the various attributes by touching an area **562** on the side pad **560** with the hand used to hold the device **530**, and the user can then adjust the value for the selected attribute by touching the area **552** on the bezel **550** with a finger of the other hand. The side pad **560** can be either a large surface for tracking touch inputs or can includes a plurality of small dedicated surfaces, such as touch buttons, for performing dedicated functions. In yet an another alternative, the additional pads **560** can also be force sensitive so that a predetermined amount of force or pressure caused by a user touch is required to invoke the user control associated with the touched areas **562** of the pads **560.**

In additional alternatives shown in **FIG. 12****,** a touch sensitive bezel **590** according to the present disclosure can be arranged in a housing **572** around at least a portion of a display **580** of an electronic device **570.** In general, the bezel **590** can include one or more discrete touch sensitive surfaces positioned in the housing **572** adjacent one or more sides of the display **580.** On device **570A,** for example, the bezel **590** has a plurality of discrete touch sensitive surfaces positioned in the housing **572** adjacent each side of the display **580.** On device **570B,** for example, the bezel **590** has a first touch sensitive surface positioned in the housing **572** adjacent three sides of the display **580** and has a second touch sensitive surfaces positioned in the housing **572** adjacent one side of the display 580. On device 570C, for example, the bezel 590 has a first and second touch sensitive surfaces positioned in the housing 572 adjacent opposing sides of the display 580. These and other alternative arrangements are possible for touch sensitive bezels according to the present disclosure.

In the embodiment of FIG. 5, the touch sensitive bezel of electronic device 200 has been described as having capacitive sensor array 220 that is used with data acquisition circuitry 230. As alluded to above, however, a touch sensitive bezel for an electronic device according to the present disclosure can include other forms of touch sensitive circuitry. Referring to FIG. 13A, another embodiment , not claimed, of a touch sensitive bezel 620 for an electronic device 600 is illustrated. Only portion of the touch sensitive bezel 620 is illustrated in FIG. 13A, and the housing, display, and other components of the electronic device 600 are not shown for illustrative purposes. In the present embodiment, the touch sensitive bezel 620 includes a Printed Circuit Board (PCB) 622 formed into a ring or frame shape and defining an inner opening 624 in which components of the display (not shown) for the electronic device are positioned. A plurality of conductive pads 626 are formed an the PCB 622, and each pad 626 is interconnected by a resistive element (not shown) according to details discussed below. The PCB 622 in this embodiment can have dimensions of approximately 20,32 by 25,4 cm (8 by 10-inches) and can have about 100 pads 626 formed around its perimeter.

The touch sensitive bezel 620 also includes a control module 630, which is housed in the electronic device and is shown here relative to the PCB 622 for illustrative purposes. The control module 630 is connected to the pads 626 of the PCB 622 by connections (not shown). The control module 630 has a plurality of components, including an infrared sensor, communication circuitry, accelerometer/inclinometer sensor, and other components. A suitable infrared sensor is an RE200B pyroelectric passive infrared sensor. A suitable accelerometer/inclinometer sensor is a KXP84 IC.

The electronic device 600 can also have a plurality of ambient light sensors 604 and a plurality of infrared (IR) modules 606, which are also shown here relative to the control module 630 for illustrative purposes. A suitable ambient light sensor is an ISL29001 light to digital sensor. The ambient light sensors 604 can be positioned in various locations on the housing of the electronic device and behind the display. The ambient light sensors 604 detect the level of ambient light near the display so that the electronic device can adjust the contrast, brightness, or backlighting of the display accordingly.

In FIG. 13B, a schematic diagram of components 632 comprising portion of the control module 630 of FIG. 13A is illustrated. The components 632 in this portion include a QT510 Interacted Circuit 634 available from Quantum Research Group, Ltd. The QT510 IC 634 is connected at three approximately equidistant points 636A, B, and C on the pad element 626, which is shown here schematically. Operation and arrangement of QT510 IC 634 and the pad element 626 is similar to that used for the QWheel^{™} available from Quantum Research Group, Ltd. However, in at least one exception, the QWheelTM has 18 pads formed into a concentric wheel with resistors of about 15K positioned between each pad and a total resistance of about 270k. In contrast, the present embodiment of the pad element 626 has about 100 pads formed as a frame for the display of the device. The 100 pads are interconnected by about 100 resistors. Each resistor has a resistance of about 2.67k so that the pad element 620 has a total resistance of about 270k.

In an additional embodiment, the operation and arrangement of IC 634 and the pad element 620 of the present disclosure can use techniques to expand the detected sensitivity of the pad element 620.

In the embodiment, not claimed, shown in FIG. 13A, the pads 626 are formed on PCB 622. In an alternative embodiment as claimed and shown in FIG. 13C, pads 626 can be formed as layers on a surface of a display 610 for the electronic device 600. For example, techniques associated with Indium oxide doped with tin oxide (referred to herein as ITO techniques) can be used to deposit the pads 626 as transparent conductive thin layers on the surface of the display 610 In this way, the touch sensitive bezel of the device 600 is essentially the perimeter of the display 610, and the housing 602 is practically consumed by the display 610. In addition, a touch sensitive wheel **650** having a plurality of pads **652** can also be deposited as on the display **610** using ITO techniques to provide additional user controls of the electronic device **600.**

In **FIG. 14**, an embodiment of an electronic device **700** having a touch sensitive bezel **720** capable of force and location detection is illustrated. Portion of the touch sensitive bezel **720** is illustrated in a detailed cutaway. In this embodiment, the bezel **720** includes a force detector combined with a location detector so that the bezel **720** can provide both location and force detection. The bezel **720** includes a cosmetic layer **730**, a substrate **740**, a dielectric spring layer **750**, and a base or support layer **760.** The substrate **740** has a plurality of conductive drive paths **742** on a "top" side and has a plurality of conductive sense paths **744** on the "bottom" side. The dielectric spring layer **750** has alternating, or spatially offset, raised structures **752** on both sides of the layer **750.** The base layer **760** has a plurality of conductive drive paths **762.** The drive paths **742** on the substrate **742** are laid down in a first direction to form rows as are the drive paths **762** on the base layer **760**. The sense paths **744** on the bottom side of the substrate **740** are laid down in a second direction to form columns.

To sense location, the device **700** uses many of the same techniques discussed above with reference to the capacitive sensor array of **FIG. 5**. During operation, for example, data acquisition circuitry (not shown) of the device **700** drives the plurality of drive paths **742** (one at a time) during a first time period. During this same time period, the sense paths **744** on the other side of the substrate **740** are interrogated to obtain data representing the location of one or more touches to the cosmetic layer **730**. For example, a user's finger placed in proximity to various rows and columns of the drive paths **742** and sense paths **744** on the top and bottom of the substrate **740** alters their capacitive relationship when processed by the data acquisition circuitry.

To sense force, circuitry of the device **700** drives the drive paths **762** on the base layer **760** (one at a time) during a second time period. During this same time, the sense paths **744** on the bottom side of the substrate **740** are again interrogated to obtain data representing the strength or intensity of force applied to cosmetic layer **730** by a user's touch. For example, when a force is applied by a user's finger on the cosmetic layer 730, the spring layer 750 deforms moving the sense paths 744 on the bottom of the substrate 740 closer to the drive paths 762 on the top of the base layer 760. A resulting change in mutual capacitance is then used to generate data indicative of the strength or intensity of an applied force.

Using force and location detection, the bezel 720 of the present embodiment can provide additional user interface and controls. For example, a user's finger in FIG. 7 is shown touching an area 721 of the bezel 720 designated for a "page down" Operation (as indicated by the adjacent visual guide 780). The electronic device 700 uses the sensed location on the bezel 720 to determine which control is invoked by the user's touch. In addition, the force applied by the user's touch is obtained using the force detection features of the bezel 700. The sensed force can be used to determine the desired speed or extent with which to perform the "page down" operations, for example.

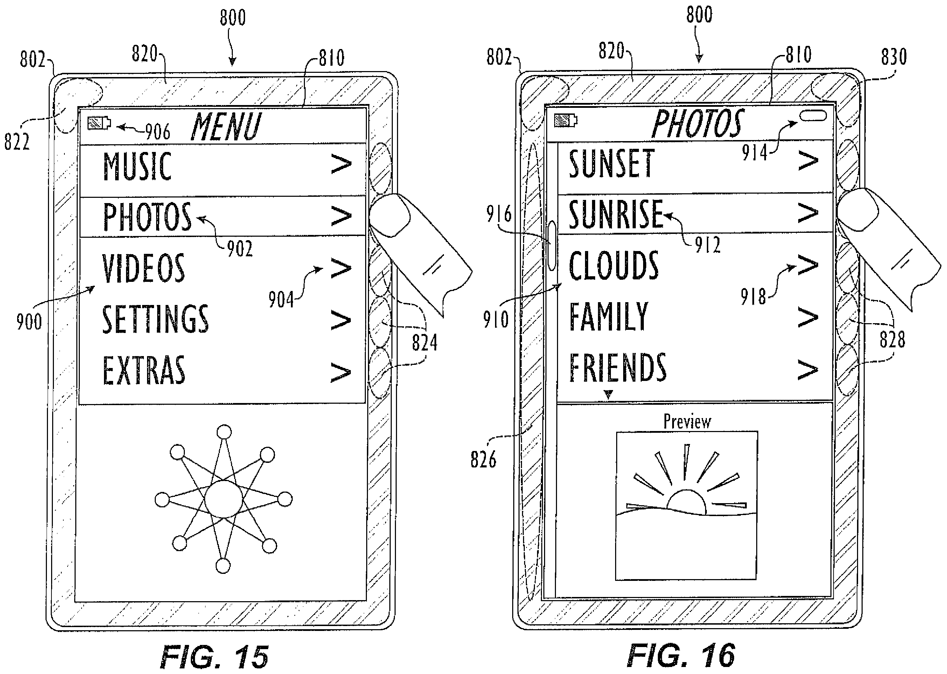

Given all of the previous discussion of the present disclosure, we now turn to an embodiment of an electronic device that incorporates one or more of the aspects and features discussed above. In FIGS. 15 through 19, an embodiment of a multimedia device 800 having a housing 802, a display 810, a touch sensitive bezel 820, and a user interface 900 according to certain teachings of the present disclosure is illustrated in a number of stages of operation and use. The multimedia device 800 in FIGS. 15 through 19 is meant to be exemplary. It will be appreciated that the user interface 900, available features and functions, user controls, screens, designations of the bezel 820, and various other details provided in the discussion that follows may be altered depending on the implementation and desired results.

In FIG. 15, a menu screen of the user interface 900 is displayed and lists various functions or features 902 *(e.g.,* Music. Photos, Videos, etc.) that are available on the device 800. An area 822 of the bezel 820 adjacent a battery symbol 906 can be touched at any point during, Operation to access power settings for the device 800 without the user having to access the settings function 902 on the menu screen 900. A plurality of areas 824 on one side of the bezel 820 are designated for selection of one of the available functions or features **902,** and visual guides **904** are provided on the perimeter of the bezel **820** adjacent the designated areas **824.** A user touching one of these areas **824** of the bezel **820** accesses a subsequent screen of the user interface **900** for the selected function or feature **902.** It should be noted that the side of the housing **802** may include a touch sensitive pad (similar to pads **560** of **FIG. 11**) on a side of the housing **802,** and areas (*e.g*., areas 562 of FIG. 11) of this side pad can be similarly designated.

In **FIG. 16**, the user has accessed the photo feature from the previous menu so that the display **810** shows a photo screen **910** listing various available photos **912.** An area **826** on the left side of the bezel **820** is designated for scrolling up and down the list of photos **912**, and a visual scroll guide **916** is provided at the perimeter of the display **810** adjacent the area **826**. A plurality of areas **828** on the right side of the bezel **820** are designated for selecting to open a selected photo **912**, and visual guides 918 for each photo **912** are provided adjacent these areas **828.** An area **830** in the upper corner adjacent a close window icon **914** on the screen **910** is designated on the bezel **820** for closing the current screen **910** to return to the menu screen of **FIG. 15****.**

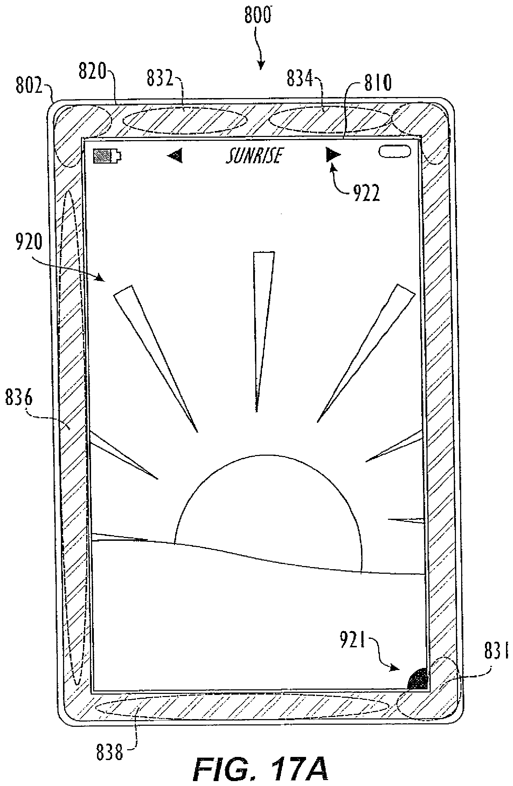

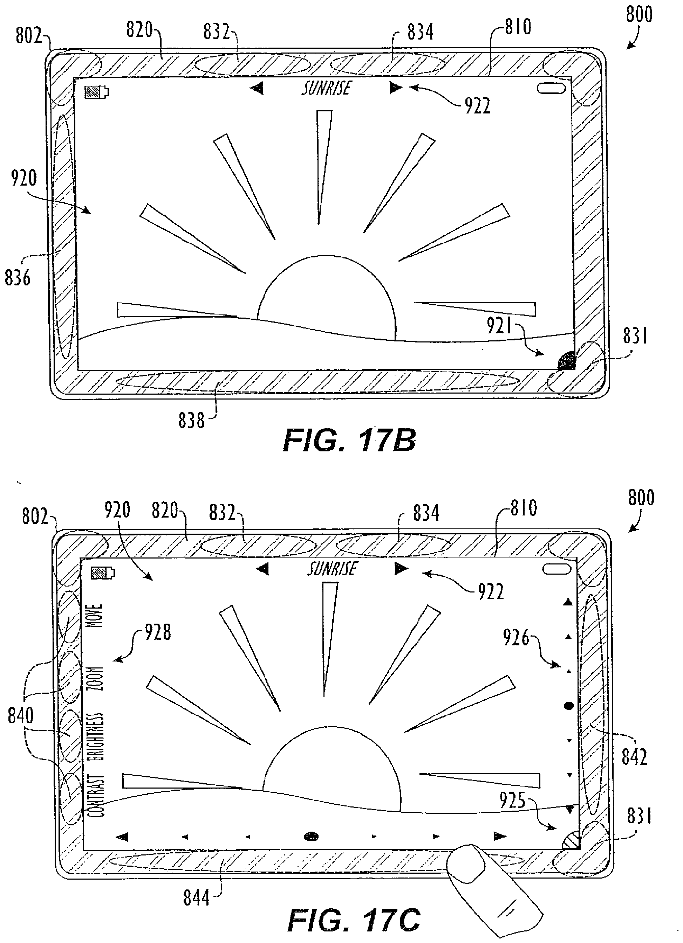

In **FIG. 17A**, the display **810** shows a screen **920** having a selected photo (*e.g*., sunrise). A toggle area **831** of the bezel 820 in the lower right corner is designated to access and display additional user controls that are discussed below with reference to **FIG. 17C****.** A visual guide **921** is provided on the display **810** adjacent this toggle area **831.** A first area **832** on the bezel **820** is designated for moving to a previous photo of those available, and a second area **834** is designated for moving to a subsequent photo. Corresponding visual guides **922** are displayed adjacent these areas **832** and **834** on the bezel **820.** Additional areas **836** and **838** on adjacent sides of the bezel **820** may be designated for any of a number of operations, such as zoom, contrast, brightness, page down, scroll, etc. In the present embodiment, visual guides are not shown adjacent these areas **836** and **838** so that the majority of the display **810** is unobstructed with elements of the user interface, and the screen **920** can primarily display the content (*i*.*e*., the sunrise photo). The user controls for which these areas **836** and **838** are designated may be already known or readily apparent to the user.

As shown in **FIG. 17A**, the device **800** is rectangular and is shown in a vertical (*i.e*., "portrait") orientation. The user may rotate the device **800** so that it has a horizontal (*i*.*e*., "landscape") orientation, such as shown in **FIG. 17B****.** As discussed previously, the device **800** can have an orientation sensor (not shown), such as an accelerometer or an inclinometer, and can determine the orientation of the device **800.** In **FIG. 17B**, the device **800** has determined the horizontal or landscape orientation. Based on this determination, the device **800** has adjusted the orientation of the screen **920** showing the photo on the display **810** in a landscape orientation and has readjusted the location of all the areas on the bezel **820** designated for the various user controls.

If the user selects the toggle area **831** in the lower right corner, the screen **920** shows additional user controls. In **FIG. 17C**, for example, the toggle area **831** has been previously selected so that a new visual guide **925** is provided adjacent the area. In addition, a plurality of areas **840** on the bezel **820** are designated for a number of user controls, which have visual guides **928** shown on the display **810** adjacent the bezel **820.** In this example, the user controls available for viewing photos include contrast, brightness, zoom, and move. A user can select 2. one of these areas **840** to access that corresponding control. Then, while the corresponding control is activated (either by highlighting the corresponding visual guide **928** or while the user continues touching the corresponding area **840**), the user can adjust values or settings for the selected control using one or more areas **842** and **844** on other portions of the bezel **820.** These areas **842** and **844** have adjacent visual guides **926** showing that they are used to adjust values. By reselecting the toggle area **831** in the lower right hand corner, the user can remove the visual guides **926** and **928** for the user controls from the screen **920.**

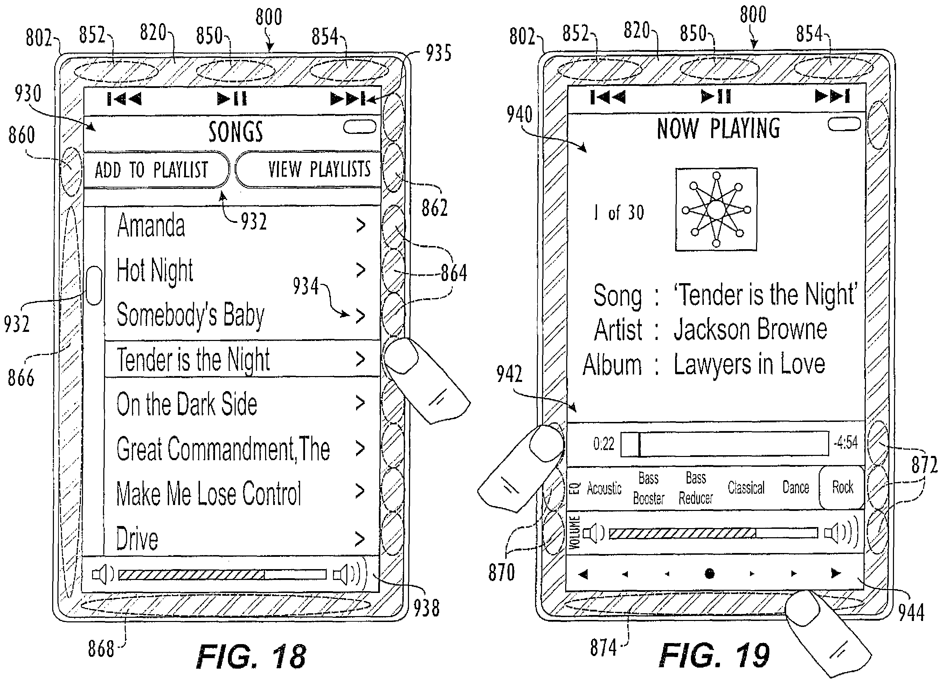

In **FIG. 18**, an example screen **930** listing songs is shown on the display **810** of the device **800.** A plurality of areas **864** on the right side of the bezel **820** adjacent visual guides **934** for the listed songs can be used to select, highlight, or open the corresponding song. An area 866 on the left side of the bezel **820** adjacent a scroll guide 932 can be used to scroll through the list of songs on the screen **930.** If the user selects or highlights one of the listed songs, the user can select areas **850** to play/pause the song or areas **852, 854** to track forward or back from the selected song. These areas **850, 852, 854** have corresponding visual guides **935.** The user can also select to add the selected song to a play list or can elect to view various play lists by selecting from additional areas **860** and **862** having visual guides **932.** Depending on the amount of area of the display **810** available, one or more user controls **938** (*e.g*., volume level) can be displayed on the screen **930,** and one or more unused areas **868** of the bezel **820** can be designated for the one or more user controls **938.**

In **FIG. 19**, an example "now playing" screen **940** is shown on the display **810** of the device **800.** The screen **940** shows information about the song that is currently being played on the device **800.** As before, the area **850** on the bezel **820** is designated for play/pause user controls, and areas **852** and **854** are designated for previous track and next track, respectively. A plurality of areas **870** and **872** are provided on the sides of the bezel **820** adjacent various visual guides **942** corresponding to various user controls (*e*.*g*., time bar for song, equalizer selection, and volume level). In one possibility, the user can select to change the settings or values of any one of these user controls by tapping or holding on the areas **870** or **872** on either side of the adjacent visual guide **942** for a control to advance or reduce the setting or value. In another possibility, the user can select or highlight one of the user controls by tapping or holding on the areas **870** or **872** on either side of the adjacent visual guide **942** for a control, and the user can then advance or reduce the setting or value by sliding over an additional area **874** of the bezel **820** next to the visual guide **944** for adjustability.

As shown by the example multimedia device **800** of **FIGS. 15** through **19**, the touch sensitive bezel **820** and the user interface **900** according to certain teachings of the present disclosure can obtain and process various forms of touch data. For example, the touch sensitive bezel **820** can be used to sense touch gestures, such as touch and drag operations, made by the user. Using the touch gestures, a user can perform a number of user controls, such as move portions of an image that are being displayed (*e*.*g*., page up or page down), move a curser to drop and drag visual elements displayed (e.g., move a holder or file in a directory window), scroll up and down through a screen, skip through images in an album or series of images, adjust the setting or value of a user control, or perform similar operations. In addition, because the touch sensitive bezel **820** can also be configured to detect force, the pressure that a user applies to a designated area of the bezel **820** can be used to determine the amount, extent, or level of a setting, adjustment, or value of a user control.

Furthermore, the touch sensitive bezel **820** according to the present disclosure can be used to obtain touch data corresponding to multiple user controls simultaneously. For example, the user controls of the bezel **820** can be configured so that one side of the bezel **820** controls brightness with a touch and drag motion by the user, while the other side of the bezel **820** controls contrast with a touch and drag motion by the user. Thus, using both of these sides of the bezel **820,** the user can simultaneously adjust both the contrast and the brightness of the display **810** using touch and drag motions on the sides of the bezel **820.** These and other possibilities and combinations will be apparent to one skilled in the art having the benefit of the present disclosure.

The foregoing description of preferred and other embodiments shows several different configurations of electronic devices. Certain features, details, and configurations were disclosed in conjunction with each embodiment. However, one skilled in the art will understand (1) that such features, details, and configurations can be used with the various different embodiments, even if such features, details, and configurations were not specifically mentioned in conjunction with a particular embodiment, and (2) that this disclosure contemplates various combinations of the features, details, and configurations disclosed herein. More specifically, the foregoing description of preferred and other embodiments is not intended to limit or restrict the scope or applicability of the inventive concepts conceived of by the Applicants. It is intended that the appended claims include all modifications and alterations to the full extent that they come within the scope of the following claims.

## Claims

1. A handheld electronic device, comprising:
a display (610) having a perimeter, the perimeter being part of the display (610);
a plurality of touch sensors (626) formed along the perimeter for making at least a portion of the display and at least a portion of the perimeter touch-sensitive; and
a processor (240) communicatively coupled to the plurality of touch sensors, the processor configured for:
using one or more of the plurality of touch sensors to detect a first touch at the perimeter,
upon detecting the first touch, causing a visual guide to be displayed at the perimeter,
detecting a second touch proximate to the displayed visual guide, and
upon detecting the second touch, initiating an operation.

2. The handheld electronic device of claim 1, wherein the first touch comprises a sliding touch.

3. The handheld electronic device of claim 1 or 2, wherein the processor is further configured for displaying one or more virtual buttons, and initiating the operation corresponding to a particular virtual button when the second touch is detected over the particular virtual button.

4. The handheld electronic device of claims 2 or 3, wherein the processor is further configured for programmably selecting the operation to be initiated upon detection of a particular sliding touch originating at the perimeter.

5. The handheld electronic device of any of the preceding claims, wherein the processor is further configured for causing the visual guide to be displayed in proximity to a location of the first touch.

6. The handheld electronic device of any of the preceding claims, wherein the processor is further configured for, upon detecting a third touch, causing the visual guide to cease being displayed.

7. The handheld electronic device of any of the preceding claims, wherein the processor is further configured for programmably defining one or more areas of the perimeter to detect the first touch.

8. A method of initiating an operation in a handheld electronic device including a display (610) having a perimeter, the perimeter being part of the display (610), the method comprising:
making at least a portion of the display and at least a portion of the perimeter touch-sensitive;
detecting a first touch at the perimeter;
upon detecting the first touch, causing a visual guide to be displayed at the perimeter;
detecting a second touch proximate to the displayed visual guide; and
upon detecting the second touch, initiating an operation.

9. The method of claim 8, wherein the first touch comprises a sliding touch.

10. The method of claim 8 or 9, further comprising displaying one or more virtual buttons, and initiating the operation corresponding to a particular virtual button when the second touch is detected over the particular virtual button.

11. The method of claim 9 or 10, further comprising programmably selecting the operation to be initiated upon detection of a particular sliding touch originating at the perimeter.

12. The method of any of claims 8 to 11, further comprising causing the visual guide to be displayed in proximity to a location of the first touch.

13. The method of any of claims 8 to 12, further comprising, upon detecting a third touch, causing the visual guide to cease being displayed.

14. The method of claim any of claims 8 to 13, further comprising programmably defining one or more areas of the perimeter to detect the first touch.

## Patentansprüche

1. Tragbare elektronische Vorrichtung, umfassend:
eine Anzeige (610) mit einem Umfang, wobei der Umfang Teil der Anzeige (610) ist;
eine Vielzahl von Berührungssensoren (626), die entlang des Umfangs ausgebildet sind, um mindestens einen Abschnitt der Anzeige und mindestens einen Abschnitt des Umfangs berührungsempfindlich zu machen; und
einen Prozessor (240), der kommunikativ mit der Vielzahl von Berührungssensoren gekoppelt ist, wobei der Prozessor konfiguriert ist zum:
Verwenden eines oder mehrerer der Vielzahl von Berührungssensoren, um eine erste Berührung am Umfang zu erfassen,
beim Erfassen der ersten Berührung, Bewirken, dass ein visueller Führer am Umfang angezeigt wird,
Erfassen einer zweiten Berührung in der Nähe des angezeigten visuellen Führers, und
beim Erfassen der zweiten Berührung, Einleiten eines Vorgangs.

2. Tragbare elektronische Vorrichtung nach Anspruch 1, wobei die erste Berührung eine gleitende Berührung umfasst.

3. Tragbare elektronische Vorrichtung nach Anspruch 1 oder 2, wobei der Prozessor ferner konfiguriert ist zum Anzeigen einer oder mehrerer virtueller Tasten und Einleiten des Vorgangs, der einer bestimmten virtuellen Taste entspricht, wenn die zweite Berührung über der bestimmten virtuellen Taste erfasst wird.

4. Tragbare elektronische Vorrichtung nach Anspruch 2 oder 3, wobei der Prozessor ferner konfiguriert ist zum programmierbaren Auswählen des Vorgangs, der beim Erfassen einer bestimmten gleitenden Berührung, die von dem Umfang ausgeht, eingeleitet werden soll.

5. Tragbare elektronische Vorrichtung nach einem der vorhergehenden Ansprüche, wobei der Prozessor ferner konfiguriert ist zum Bewirken, dass der visuelle Führer in der Nähe einer Stelle der ersten Berührung angezeigt wird.

6. Tragbare elektronische Vorrichtung nach einem der vorhergehenden Ansprüche, wobei der Prozessor ferner konfiguriert ist zum, beim Erfassen einer dritten Berührung, Bewirken, dass der visuelle Führer nicht mehr angezeigt wird.

7. Tragbare elektronische Vorrichtung nach einem der vorhergehenden Ansprüche, wobei der Prozessor ferner konfiguriert ist zum programmierbaren Definieren eines oder mehrerer Bereiche des Umfangs, um die erste Berührung zu erfassen.

8. Verfahren zum Initiieren eines Vorgangs in einer tragbaren elektronischen Vorrichtung, die eine Anzeige (610) mit einem Umfang beinhaltet, wobei der Umfang Teil der Anzeige (610) ist, wobei das Verfahren umfasst:
Bewirken, dass mindestens ein Abschnitt der Anzeige und mindestens ein Abschnitt des Umfangs berührungsempfindlich ist;
Erfassen einer ersten Berührung am Umfang;
beim Erfassen der ersten Berührung, Bewirken, dass ein visueller Führer am Umfang angezeigt wird;
Erfassen einer zweiten Berührung in der Nähe des angezeigten visuellen Führers; und
beim Erfassen der zweiten Berührung, Einleiten eines Vorgangs.

9. Verfahren nach Anspruch 8, wobei die erste Berührung eine gleitende Berührung umfasst.

10. Verfahren nach Anspruch 8 oder 9, ferner umfassend das Anzeigen einer oder mehrerer virtueller Tasten und Einleiten des Vorgangs, der einer bestimmten virtuellen Taste entspricht, wenn die zweite Berührung über der bestimmten virtuellen Taste erfasst wird.

11. Verfahren nach Anspruch 9 oder 10, ferner umfassend ein programmierbares Auswählen des Vorgangs, der beim Erfassen einer bestimmten gleitenden Berührung, die von dem Umfang ausgeht, eingeleitet werden soll.

12. Verfahren nach einem der Ansprüche 8 bis 11, ferner umfassend ein Bewirken, dass der visuelle Führer in der Nähe einer Stelle der ersten Berührung angezeigt wird.

13. Verfahren nach einem der Ansprüche 8 bis 12, ferner umfassend, beim Erfassen einer dritten Berührung, ein Bewirken, dass der visuelle Führer nicht mehr angezeigt wird.

14. Verfahren nach einem der Ansprüche 8 bis 13, ferner umfassend ein programmierbares Definieren eines oder mehrerer Bereiche des Umfangs, um die erste Berührung zu erfassen.

## Revendications

1. Un dispositif électronique à tenir à la main, comprenant :
un afficheur (610) avec un périmètre, le périmètre faisant partie de l'afficheur (610) ;
une pluralité de capteurs tactiles (626) formés le long du périmètre pour rendre sensible au toucher au moins une partie de l'afficheur et au moins une partie du périmètre ; et
un processeur (240) couplé de manière communicante à la pluralité de capteurs tactiles, le processeur étant configuré pour :
utiliser un ou plusieurs de la pluralité de capteurs tactiles pour détecter un premier toucher sur le périmètre,
sur détection du premier toucher, faire en sorte d'afficher un guide visuel sur le périmètre,
détecter un second toucher à proximité du guide visuel affiché, et
sur détection du second toucher, déclencher une opération.

2. Le dispositif électronique à tenir à la main de la revendication 1, dans lequel le premier toucher comprend un toucher glissant.

3. Le dispositif électronique à tenir à la main de la revendication 1 ou 2, dans lequel le processeur est en outre configuré pour afficher un ou plusieurs boutons virtuels, et déclencher l'opération correspondant à un bouton virtuel particulier lorsque le second toucher est détecté sur le bouton virtuel particulier.

4. Le dispositif électronique à tenir à la main des revendications 2 ou 3, dans lequel le processeur est en outre configuré pour, de manière programmable, sélectionner l'opération à déclencher sur détection d'un toucher glissant particulier commençant sur le périmètre.

5. Le dispositif électronique à tenir à la main de l'une des revendications précédentes, dans lequel le processeur est en outre configuré pour faire en sorte d'afficher le guide visuel à proximité d'un emplacement du premier toucher.

6. Le dispositif électronique à tenir à la main de l'une des revendications précédentes, dans lequel le processeur est en outre configuré pour, sur détection d'un troisième toucher, faire en sorte de cesser d'afficher le guide visuel.

7. Le dispositif électronique à tenir à la main de l'une des revendications précédentes, dans lequel le processeur est en outre configuré pour, de manière programmable, définir une ou plusieurs zones du périmètre pour la détection du premier toucher.

8. Un procédé de déclenchement d'une opération dans un dispositif électronique à tenir à la main comprenant un afficheur (610) avec un périmètre, le périmètre faisant partie de l'afficheur (610), le procédé comprenant :
rendre sensible au toucher au moins une partie de l'afficheur et au moins une partie du périmètre ;
détecter un premier toucher sur le périmètre ;
sur détection du premier toucher, faire en sorte d'afficher un guide visuel sur le périmètre ;
détecter un second toucher à proximité du guide visuel affiché ; et
sur détection du second toucher, déclencher une opération.

9. Le procédé de la revendication 8, dans lequel le premier toucher comprend un toucher glissant.

10. Le procédé de la revendication 8 ou 9, comprenant en outre l'affichage d'un ou plusieurs boutons virtuels, et le déclenchement de l'opération correspondant à un bouton virtuel particulier lorsque le second toucher est détecté sur le bouton virtuel particulier.

11. Le procédé des revendications 9 ou 10, comprenant en outre, de manière programmable, la sélection de l'opération à déclencher sur détection d'un toucher glissant particulier commençant sur le périmètre.

12. Le procédé de l'une des revendications 8 à 11, comprenant en outre de faire en sorte d'afficher le guide visuel à proximité d'un emplacement du premier toucher.

13. Le procédé de l'une des revendications 8 à 12, comprenant en outre, sur détection d'un troisième toucher, de faire en sorte de cesser d'afficher le guide visuel.

14. Le procédé de l'une des revendications 8 à 13, comprenant en outre, de manière programmable, la définition d'une ou plusieurs zones du périmètre pour la détection du premier toucher.
